# FASCICULE DE BREVET EUROPEEN

(11) **EP 3 194 816 B1**
(45) Date de publication et mention de la délivrance du brevet: **20.06.2018**
(21) Numéro de dépôt: 15760226.9
(22) Date de dépôt: 24.08.2015
(51) Int. Cl.: F16K 11/052, F16K 1/20, F16K 1/226

(54) **VANNE DE CONTROLE MOTEUR DANS UN VEHICULE AUTOMOBILE**
MOTORREGELVENTIL IN EINEM KRAFTFAHRZEUG
ENGINE CONTROL VALVE IN A MOTOR VEHICLE

(30) Priorité: 25.08.2014 FR 1457969
(43) Date de publication de la demande: 26.07.2017
(73) Titulaire: Valeo Systèmes De Contrôle Moteur, 95800 Cergy Saint Christophe (FR)
(72) Inventeur: HODEBOURG, Grégory, 78500 SARTROUVILLE (FR)
(74) Mandataire: Garcia, Christine
(86) Numéro de dépôt international: PCT/FR2015/052258
(87) Numéro de publication internationale: WO 2016/030625

(56) Documents cités:
- DE-A1- 2 427 995
- FR-A1- 2 653 198
- JP-A- 2003 214 543
- JP-A- 2005 171 808
- JP-A- 2010 261 359
- US-A1- 2006 038 151

## Description

L'invention se rapporte à une vanne de contrôle moteur ainsi qu'à un moteur et un véhicule automobile comprenant une telle vanne.

De manière traditionnel, les moteurs actuels comprennent un système de dépollution par recirculation des gaz d'échappement qui est constitué d'une conduite permettant de faire transiter les gaz d'échappement vers l'admission, assortie d'un échangeur thermique destiné à refroidir les gaz brûlés et d'une vanne, appelée communément vanne de recirculation des gaz d'échappement (RGE ou EGR en anglais pour Exhaust Gas Recirculation), dont l'ouverture est pilotée par un calculateur de contrôle moteur afin de régler le débit de gaz brûlés réintroduits en direction de l'admission.

Le principe de fonctionnement de ce type de vanne repose ainsi sur la rotation commandée d'un volet, pouvant passer d'une position d'ouverture complète pour laisser passer le fluide de gaz d'échappement, à une position de fermeture pour bloquer ce passage.

Une vanne de contrôle moteur possède donc un volet, qui est monté pivotant sur un axe de rotation, de sorte que ledit axe sépare le volet en une première partie et en une deuxième partie. Il est à préciser qu'aucune limite physique ne matérialise la frontière entre la première et la deuxième partie du volet, lesdites parties étant séparées fictivement par un plan passant par l'axe de rotation du volet et coupant ledit volet perpendiculairement. Lorsque ce volet se retrouve dans une position de fermeture, il vient au contact de moyens d'étanchéité, tel qu'un joint, qui sont solidaires du corps de vanne, plus particulièrement de la structure interne du corps de vanne. Plus précisément, la première partie vient au contact d'une face du joint, tandis que la deuxième partie dudit volet vient en appui sur la face opposée dudit joint.

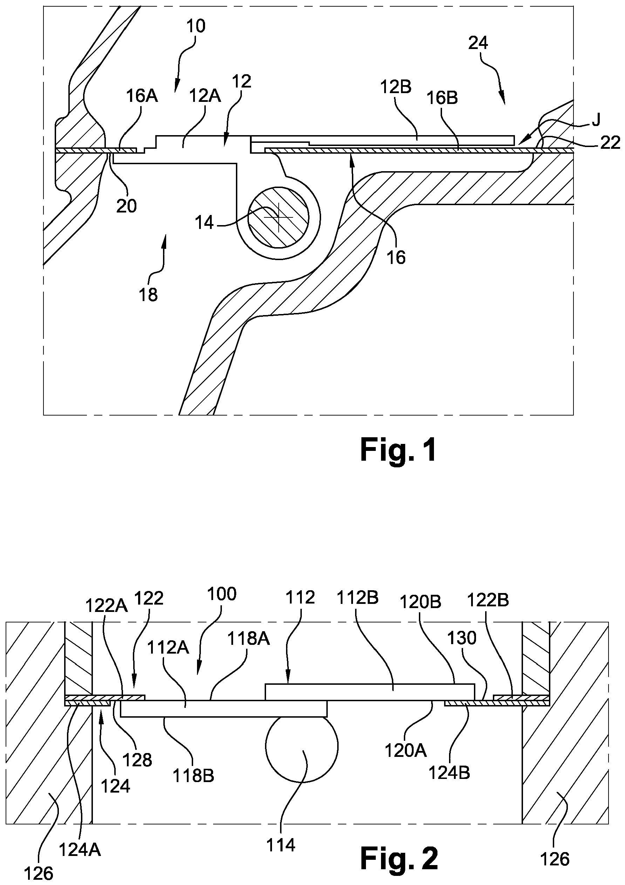

En effet, en se référant à la figure 1, une vanne de contrôle moteur 10 de la technique antérieure comprend un volet 12 monté à rotation autour d'un axe de rotation 14, séparant ledit volet 16 en une première 12A et une deuxième partie 12B, lesdites parties 12A, 12B étant reliées l'une à l'autre de façon rigide et en continuité l'une de l'autre. Le volet 12 a, en section, globalement la forme d'un parallélépipède rectangle de faible épaisseur, dont l'axe longitudinal est perpendiculaire à l'axe 14 de rotation qui traverse ledit volet 12.

Le joint 16 de la structure interne de la vanne 10, contre lequel vient en appui le volet 12 lorsque celui-ci se retrouve dans une position de fermeture, est plan et comprend une première portion 16A apte à coopérer à étanchéité avec la première partie 12A du volet 12, et une deuxième 16B portion destinée à coopérer à étanchéité avec la deuxième partie 12B dudit volet 12. Les deux portions 16A, 16B du joint 16 sont planes et en continuité l'une de l'autre. En se référant à la figure 1, lorsque le volet 12 pivote pour se fermer, la première partie 12A remonte dans le sens indiqué par la flèche 18, pour venir en contact à étanchéité avec une première surface plane 20 de la première portion 16A du joint 16, tandis que la deuxième partie 12B du volet 12 se rabat sur une seconde surface plane 22, opposée à la première surface 20, de la deuxième portion 16B du joint 16, dans le sens indiqué par la flèche 24.

En pratique, l'appui des première 12A et deuxième 12B parties du volet 12 sur les faces 20, 22 opposées sur joint 16 implique qu'il est nécessaire de décaler les faces d'appui respectives des première 12A et seconde 12B parties du volet 12. Toutefois, les tolérances de fabrication du volet 12 et du joint 16 montrent qu'en pratique la première partie 12A du volet12, par exemple, est en contact avec la première portion 16A du joint 16 et qu'un jeu J subsiste entre la deuxième portion 16B du joint 16 et la deuxième partie 12B. Ce jeu J est ainsi à l'origine d'une circulation parasite de gaz qui n'est pas souhaitée et ne permet pas un fonctionnement optimal du système de dépollution.

Ce jeu J est principalement la conséquence des tolérances de fabrication du volet 12 et du joint 16 ainsi que des tolérances de positionnement de ces éléments dans le corps de vanne 10. Hors, la réduction des tolérances de fabrication pour réduire le jeu J impliquerait une augmentation importante des couts de fabrication, ce qui n'est pas acceptable.

De plus, pour garantir un bon fonctionnement du système de dépollution, il est important de pouvoir parfaitement contrôler l'écoulement des gaz au travers du volet 12 et ainsi de pouvoir s'assurer de la fermeture totale de la vanne lorsque cela est nécessaire. FR2653198 décrit une vanne de contrôle moteur selon le préambule de la revendication 1. L'invention a notamment pour but d'améliorer l'étanchéité de la vanne en positon de fermeture.

A cette fin, elle propose une vanne de contrôle moteur pour un véhicule, en particulier un véhicule automobile, comprenant un volet monté à rotation dans un corps de vanne autour d'un axe séparant ledit volet en une première partie et une deuxième partie, ledit volet étant apte à coopérer avec des moyens d'étanchéité du corps de vanne dans une position de fermeture pour stopper l'écoulement d'un fluide au travers dudit volet pour laquelle la première partie coopère à étanchéité avec une première surface plane des moyens d'étanchéité et la deuxième partie coopère à étanchéité avec une deuxième surface plane des moyens d'étanchéité, caractérisée en ce que les moyens d'étanchéité sont élastiquement déformables et en ce que la première surface plane et la deuxième surface plane des moyens d'étanchéité sont comprises dans un même plan.

Selon l'invention, les surfaces d'appui des première et seconde surface des moyens d'étanchéité sur lesquelles les première et deuxième surfaces du volet viennent en appui sont contenus dans un même plan, ce qui évite d'avoir à décaler relativement l'une à l'autre les surfaces d'appui des première et deuxième partie du volet. De plus, l'utilisation de moyens d'étanchéité élastiquement déformables permet de réaliser une déformation élastique des joints par les surfaces d'appui respectives en contact, ce qui réduit l'impact des tolérances de fabrication et permet d'obtenir une bonne étanchéité de la vanne de contrôle moteur en position de fermeture.

En pratique, la première partie du volet comprend une surface plane destinée à venir en appui sur la première surface plane des moyens d'étanchéité et la deuxième partie du volet comprend une surface plane destinée à venir en appui sur la deuxième surface plane des moyens d'étanchéité, les première et deuxième surfaces planes des moyens d'étanchéité et les surfaces planes des première et deuxième parties du volet étant comprises dans un même plan en position de fermeture.

Ainsi, en position de fermeture les surfaces d'appui des première et deuxième parties du volet et les première et seconde surfaces des moyens d'étanchéité sont situées sur un même plan commun d'étanchéité.

Dans une réalisation pratique de l'invention, les moyens d'étanchéité comprennent un premier et un second joints annulaires d'axes perpendiculaires à l'axe du volet et superposés l'un sur l'autre, le premier joint comprenant une première portion en saillie vers l'intérieur de la vanne par rapport à une première portion du second joint et portant la première surface plane, le second joint comprenant une seconde portion en saillie vers l'intérieur de la vanne par rapport à une seconde portion du premier joint et portant la seconde surface plane.

L'utilisation de deux joints annulaires dont l'un comprend une partie en saillie coopérant avec la première partie du volet et l'autre comprend une partie en saillie coopérant avec la deuxième partie du volet permet de réaliser de manière simple le montage selon l'invention.

Préférentiellement, les moyens d'étanchéité sont des joints métalliques, tel qu'en particulier de l'inox.

L'invention concerne également un moteur de véhicule automobile, comprenant au moins une vanne du type décrit précédemment.

L'invention concerne encore un véhicule automobile, comprenant un moteur intégrant une vanne comme décrite ci-dessus.

L'invention concerne également un véhicule automobile, caractérisé en ce qu'il est équipé d'un dispositif du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en coupe selon un plan perpendiculaire à l'axe du volet d'une vanne de contrôle moteur selon la technique connue, cette figure ayant été commentée précédemment ;
- la figure 2 est une schématique en coupe selon un plan perpendiculaire à l'axe du volet d'une vanne de contrôle moteur selon l'invention.

On se réfère maintenant à la figure 2 qui représente une vanne 100 de contrôle moteur selon l'invention comprenant un volet 112 monté pivotant autour d'un axe 114 de rotation. Le volet 112 comprend une première 112A et une seconde 112B parties reliées l'une à l'autre au niveau de l'axe de rotation 114. Les première 112A et seconde 112B parties du volet 112 sont de forme, en coupe, parallélépipédique. La première partie du volet 112 comprend une première surface plane 118A et une seconde surface plane 118B opposées. De manière similaire, la deuxième partie 112B du volet 112 comprend une première surface plane 120A et une seconde surface plane 120B opposées. Une extrémité de la première partie 112A du volet 112 est agencée sur l'axe 114 de manière à ce que sa première surface 118A soit située à l'opposé de l'axe 114 par rapport à sa seconde surface 118B. La deuxième partie 112B du volet 112 est appliquée au niveau d'une extrémité par l'intermédiaire de sa première surface 120A plane sur la première surface plane 118A de la première partie 112A du volet 112.

La première partie 112A et la deuxième partie 112B du volet 112 possède des épaisseurs constantes dans une direction parallèlement à l'axe 114.

Selon l'invention, deux joints annulaires 122, 124 élastiquement déformables sont superposées l'un sur l'autre et sont fixés au niveau de leur périphérie externe sur la structure interne 126 du corps de vanne 100.

Un premier joint 122 comprend une première portion 122A en saillie vers l'intérieur de la vanne 100 par rapport à une première portion 124A du second joint 124 et est, en position de fermeture du volet 112, agencée en vis-à-vis de la première partie 112A du volet 112. Cette première portion 122A en saillie du premier joint 122 comprend une première surface plane 128 destinée à venir en contact en positon de fermeture avec la première surface plane 118A de la première partie 112A du volet 112.

Le second joint 124 comprend une deuxième portion 124B en saillie vers l'intérieur de la vanne 100 par rapport à une deuxième portion 122B du premier joint 122 et est agencée, en position de fermeture du volet 112, en vis-à-vis de la deuxième partie 112B du volet 112. Cette deuxième portion 124B en saillie du second joint 124 comprend une première surface 130 plane destinée à venir en contact en positon de fermeture avec la première surface plane 120A de la seconde partie 112B du volet 112.

Comme cela est visible sur la figure 2, la surface plane 128 de la première portion en saillie 122A du premier joint 122, la surface plane 130 de la portion en saillie 12B du second joint 12 et les premières surfaces planes 118A, 120A des première et deuxième parties 112A, 112B du joint 112 sont situées sur un même plan en position de fermeture, ce qui permet de réduire l'impact des tolérances de fabrication des première et deuxième parties du volet 112 et des joints 122, 124 sur l'étanchéité de la vanne 100 en position de fermeture.

Dans une réalisation pratique de l'invention, les joints annulaires 122, 124 sont réalisés dans un matériau métallique tel que de l'inox. Chaque joint 122, 124 peut avoir une épaisseur de l'ordre de 3 mm, par exemple.

Le terme « annulaire » utilisé en relation avec les joints 122, 124 signifie ici que le joint a un contour fermé, vu selon l'axe du joint. On comprend que tout type de contour fermé peut être utilisé à partir du moment où la forme est adaptée pour coopérer avec un volet 112 dans une vanne selon l'invention.

## Revendications

1. Vanne (100) de contrôle moteur pour un véhicule, en particulier un véhicule automobile, comprenant un volet (112) monté à rotation dans un corps (126) de vanne autour d'un axe (114) séparant ledit volet (112) en une première partie (112A) et une deuxième partie (112B), ledit volet (112) étant apte à coopérer avec des moyens d'étanchéité du corps (126) de vanne dans une position de fermeture pour stopper l'écoulement d'un fluide au travers dudit volet (112) pour laquelle la première partie (112A) coopère à étanchéité avec une première surface plane (128) des moyens d'étanchéité et la deuxième partie (112B) coopère à étanchéité avec une deuxième surface plane (130) des moyens d'étanchéité, **caractérisée en ce que** les moyens d'étanchéité sont élastiquement déformables et **en ce que** la première surface plane (128) et la deuxième surface plane (130) des moyens d'étanchéité sont comprises dans un même plan, les moyens d'étanchéité comprenant un premier (122) et un second (124) joints annulaires d'axes perpendiculaires à l'axe (114) du volet (112) et superposés l'un sur l'autre, le premier joint (122) comprenant une première portion (122A) en saillie vers l'intérieur de la vanne par rapport à une première portion (124A) du second joint (124) et portant la première surface plane (128), le second joint (124) comprenant une seconde portion (124B) en saillie vers l'intérieur de la vanne (100) par rapport à une seconde portion (122B) du premier joint (122) et portant la seconde surface plane (130).

2. Vanne selon la revendication 1, **caractérisée en ce que** la première partie (112A) du volet (112) comprend une surface plane (112A) destinée à venir en appui sur la première surface plane (128) des moyens d'étanchéité et la deuxième partie (112B) du volet (112) comprend une surface plane (120A) destinée à venir en appui sur la deuxième surface plane (130) des moyens d'étanchéité, les première (128) et deuxième (130) surfaces planes des moyens d'étanchéité et les surfaces planes (118A, 120A) des première (112A) et deuxième (112B) parties du volet (112) étant comprises dans un même plan en position de fermeture.

3. Vanne selon l'une des revendications 1 à 2, **caractérisée en ce que** les moyens d'étanchéité sont des joints métalliques, tel qu'en particulier de l'inox.

4. Moteur de véhicule automobile, **caractérisé en ce qu'**il comprend au moins une vanne (100) selon l'une des revendications précédentes.

5. Véhicule automobile, **caractérisé en ce qu'**il comprend un moteur selon la revendication 4.

## Patentansprüche

1. Motorregelventil (100) für ein Fahrzeug, insbesondere ein Kraftfahrzeug, umfassend eine Klappe (112), die in einem Ventilgehäuse (126) drehbar um eine Achse (114) gelagert ist, welche die Klappe (112) in einen ersten Teil (112A) und einen zweiten Teil (112B) trennt, wobei die Klappe (112) geeignet ist, in einer Schließstellung mit Dichtmitteln des Ventilgehäuses (126) zusammenzuwirken, um das Strömen eines Fluids durch die Klappe (112) zu stoppen, wobei der erste Teil (112A) abdichtend mit einer ersten ebenen Fläche (128) der Dichtmittel zusammenwirkt und der zweite Teil (112B) abdichtend mit einer zweiten ebenen Fläche (130) der Dichtmittel zusammenwirkt, **dadurch gekennzeichnet, dass** die Dichtmittel elastisch verformbar sind und dass die erste ebene Fläche (128) und die zweite ebene Fläche (130) der Dichtmittel in derselben Ebene enthalten sind, wobei die Dichtmittel eine erste (122) und eine zweite (124) ringförmige Dichtung umfassen, deren Achsen senkrecht zur Achse (114) der Klappe (112) verlaufen und die übereinander liegen, wobei die erste Dichtung (122) einen ersten Abschnitt (122A) umfasst, der in Bezug auf einen ersten Abschnitt (124A) der zweiten Dichtung (124) zum Inneren des Ventils hin vorspringt und die erste ebene Fläche (128) trägt, wobei die zweite Dichtung (124) einen zweiten Abschnitt (124B) umfasst, der in Bezug auf einen zweiten Abschnitt (122B) der ersten Dichtung (122) zum Inneren des Ventils (100) hin vorspringt und die zweite ebene Fläche (130) trägt.

2. Ventil nach Anspruch 1, **dadurch gekennzeichnet, dass** der erste Teil (112A) der Klappe (112) eine ebene Fläche (112A) umfasst, die dazu bestimmt ist, auf der ersten ebenen Fläche (128) der Dichtmittel in Anlage zu kommen, und der zweite Teil (112B) der Klappe (112) eine ebene Fläche (120A) umfasst, die dazu bestimmt ist, auf der zweiten ebenen Fläche (130) der Dichtmittel in Anlage zu kommen, wobei die erste (128) und zweite (130) ebene Fläche der Dichtmittel und die ebenen Flächen (118A, 120A) des ersten (112A) und zweiten (112B) Teils der Klappe (112) in der Schließstellung in derselben Ebene enthalten sind.

3. Ventil nach einem der Ansprüche 1 bis 2, **dadurch gekennzeichnet, dass** die Dichtmittel Dichtungen aus Metall wie insbesondere Edelstahl sind.

4. Kraftfahrzeugmotor, **dadurch gekennzeichnet, dass** er mindestens ein Ventil (100) nach einem der vorhergehenden Ansprüche umfasst.

5. Kraftfahrzeug, **dadurch gekennzeichnet, dass** es einen Motor nach Anspruch 4 umfasst.

## Claims

1. Engine control valve (100) for a vehicle, particularly a motor vehicle, comprising a flap (112) mounted with the ability to rotate in a valve body (126) about an axis (114) dividing the said flap (112) into a first part (112A) and a second part (112B), the said flap (112) being able to collaborate with sealing means of the valve body (126) in a closed position in order to stop the flow of a fluid through the said flap (112), for which position the first part (112A) collaborates in a sealed manner with a first flat surface (128) of the sealing means and the second part (112B) collaborates in a sealed manner with a second flat surface (130) of the sealing means, **characterized in that** the sealing means are elastically deformable and **in that** the first flat surface (128) and the second flat surface (130) of the sealing means are comprised in the one same plane, the sealing means comprising a first (122) and a second (124) annular seal with axes perpendicular to the axis (114) of the flap (112) and superposed on one another, the first seal (122) comprising a first portion (122A) projecting towards the inside of the valve with respect to a first portion (124A) of the second seal (124) and bearing the first flat surface (128), the second seal (124) comprising a second portion (124B) projecting towards the inside of the valve (100) with respect to a second portion (122B) of the first seal (122) and bearing the second flat surface (130).

2. Valve according to Claim 1, **characterized in that** the first part (112A) of the flap (112) comprises a flat surface (112A) intended to come to bear against the first flat surface (128) of the sealing means and the second part (112B) of the flap (112) comprises a flat surface (120A) intended to come to bear on the second flat surface (130) of the sealing means, the first (128) and the second (130) flat surfaces of the sealing means and the flat surfaces (118A, 120A) of the first (112A) and second (112B) parts of the flap (112) being comprised in the one same plane in the closed position.

3. Valve according to one of Claims 1 and 2, **characterized in that** the sealing means are metal seals, particularly made of stainless steel.

4. Motor vehicle engine, **characterized in that** it comprises at least one valve (100) according to one of the preceding claims.

5. Motor vehicle, **characterized in that** it comprises an engine according to Claim 4.
